# EUROPEAN PATENT APPLICATION

(11) **EP 1 061 657 A2**
(43) Date of publication of application: **20.12.2000**
(21) Application number: 00111952.8
(22) Date of filing: 15.06.2000
(51) Int. Cl.: H04B 1/20, H04L 12/42

(54) **An audio apparatus, a controller, an audio system, and a method of controlling an audio apparatus**

(30) Priority: 15.06.1999 JP 16902199
(71) Applicant: YAMAHA CORPORATION, Hamamatsu-shi Shizuoka-ken (JP)
(72) Inventor: Narusawa, Sadayuki, Hamamatsu-shi, Shizuoka (JP); Matsuyama, Tetsuya, Hamamatsu-shi, Shizuoka (JP); Oba, Toshifumi, Hamamatsu-shi, Shizuoka (JP)
(74) Representative: Geyer, Ulrich F., Dr. Dipl.-Phys.

(57) **Abstract**

An audio apparatus receives an operation control command to control, according to the command, operation of a control target section corresponding to the command. The audio apparatus sends a response command to a controller according to a state of operation of the control target section after the control operation for the control target section. The controller displays an image similar to an operator panel of the audio apparatus, generates an operation control command in response to operation of the user, and sends the control command to the audio apparatus. The controller updates the image according to a response command received from the audio apparatus. The image displayed on the controller matches the actual state of operation of the audio apparatus in any situation. The system can conduct operation as desired by the user.

## Description

This application is based on Japanese patent application Hei-11-169021 filed on June 15, 1999, the entire contents of which are incorporated herein by reference.

### BACKGROUND OF THE INVENTION

### a) Field of the Invention

The present invention relates to an audio apparatus, a controller, an audio system, and a method of controlling an audio apparatus, and in particular, to a technique to establish, when a computer is connected to an audio apparatus, synchronization between the computer and the audio apparatus.

### b) Description of the Related Art

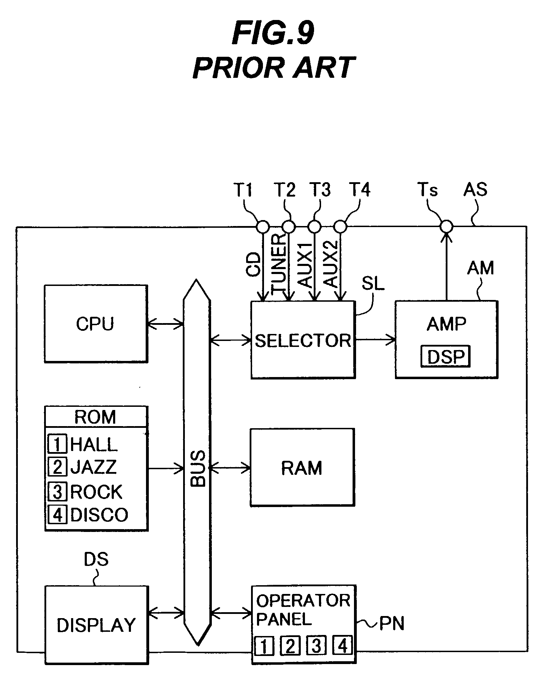

Fig. 9 shows a block diagram of an outline of an amplifier system as an example of a stand-alone audio system of the prior art.

An external compact disk (CD) player supplies a digital audio signal or an analog audio signal to a CD player terminal T1. An external tuner inputs an analog audio signal to a tuner terminal T2. Other audio signals are fed to a first auxiliary terminal T3 and a second auxiliary terminal T4. An input selector SL is connected to the terminals T1 to T4. The selector SL includes a digital-to-analog (D/A) converter and an analog-to-digital (A/D) converter, which are not shown. An analog audio signal is delivered via the selector SL to an audio amplifier section AM. The amplifier section AM includes a digital signal processor (DSWP) and amplifies the audio signal, and then outputs the amplified signal to a speaker terminal Ts. The terminal Ts is connected to a loudspeaker, not shown. A central processing unit (CPU) 150 controls the overall operation of the amplifier system AS. A read-only memory (ROM) 151 stores various programs for DSP, data for DSP, various control programs, and control data. A random access memory (RAM) 152 serves as a work area to temporarily store various data items. A display section 153 displays various information items such as a sound source being selected and a DSP mode. An operator panel 154 includes various types of operation keys.

A bus 155 connects the input selector SL, the CPU 150, the ROM 151, the RAM 152, the display 153, and the operator panel 154 to each other.

Operation of the amplifier system will be briefly described.

First, description will be given of a situation in which DSP is not conducted. When a user activates a selection switch, not shown, of the operator panel 154, an operation state of the panel 154 is notified via the bus 155 to the CPU 150. The input selector SL connects under control of the CPU 150 one of the terminals T1 to T4 to the audio amplifier section AM.

An external equipment inputs an analog audio signal via the selector SL to the amplifier section AM. The amplifier section AM amplifies the input signal and then outputs the amplified signal to the speaker terminal Ts. The speaker connected to the terminal Ts sounds.

Concurrently, the display section 153 displays information of the selected sound source (e.g., a CD player) or the like.

Next, description will be given of a situation to conduct DSP. When a user operates a selection switch and a DSP mode selection switch, not shown, of the panel 154, an operation state of the panel 154 is notified via the bus 155 to the CPU 150. Under control of the CPU 150, the input selector SL sequentially stores a digital signal obtained by A/D converting an analog audio signal inputted from one of the terminals T1 to T4 in an RAM.

The DSP in the amplifier section AM reads from the ROM 151 a program corresponding to the selected DSP mode ("HALL", "JAZZ", "ROCK", or "DISCO" mode) and conducts DSP for the digital audio signal stored in the DSP RAM. The amplifier section AM amplifies the analog audio signal resultant from the DSP and then outputs the amplified signal to the speaker terminal Ts. The speaker connected to the terminal Ts produces sound.

The display section 153 displays information of the selected sound source (e.g., a CD player), the selected DSP mode (e.g., "JAZZ"), and the like.

As above, in a standalone audio apparatus of the prior art, the actual control of operation is completely subordinate to the operation of the panel PN. Therefore, the items of images displayed on the display DS match the actual state of operation in any situation.

With recent broad use of computers in various fields, a sound function, which has been an item like a giveaway of a computer system, needs performance similar to that of a standalone audio apparatus.

For this purpose, it can be considered to connect an audio apparatus via an interface to a computer so that the computer controls operation of the audio apparatus.

In this configuration, the computer and the audio apparatus are in operation independent to each other. Consequently, for example, when transmission error of control data sent from the computer to the audio apparatus occurs, a state of operation of the audio apparatus in the computer may possibly differ from the actual state of operation of the audio apparatus.

Particularly, when a user desires to control the audio apparatus from a display screen of the computer, the control operation can differ from what the user desires.

### SUMMARY OF THE INVENTION

It is therefore an object of the present invention to provide an audio apparatus, a controller, an audio system, and a method of controlling an audio apparatus in which even when a user controls an audio apparatus from a display screen of a computer, the operation state of the audio apparatus displayed on the display screen reflects the actual operation state thereof and hence the user can appropriately control operation of the audio apparatus.

It is an object of the present invention to provide an audio apparatus, comprising: a control target section; a control command receiving section for receiving an operation control command associated with the control target section; and an operation control section for controlling operation of the control target section corresponding to the operation control command received, and for sending a response command according to a state of the control target section after the control operation for the control target section.

It is another object of the present invention to provide an audio apparatus, comprising: a control target section; an operation section for a user to conduct operation; and an operation control section for controlling the control target section according to an operation state of the operation section and for sending an operation notifying command to notify, according to the operation state of the control target section, the state of operation to a transmission partner, wherein the operation control section repeatedly resends the operation notifying command until a response command notifying reception of the operation notifying command is received from the transmission partner of the operation notifying command.

It is another object of the present invention to provide a controller, comprising: a display and operator panel section which displays an image corresponding to an operator panel of an audio apparatus to be controlled and in which an operation is indicated through the image displayed; and a central processing section for sending to the audio apparatus an operation control command associated with the operation indicated from the display and operator panel section and for updating the image displayed on the display and operator panel section, according to a response command received from the audio apparatus.

It is another object of the present invention to provide a controller, comprising: a display section for displaying an image corresponding to an operator panel of an audio apparatus to be controlled; and a central control section for updating the image displayed on the display section, according to an operation notifying command received from the audio apparatus.

It is another object of the present invention to provide an audio system, comprising an audio apparatus including: a control target section; a control command receiving section associated with the control target section, for receiving an operation control command; and an operation control section for controlling operation of the control target section corresponding to the operation control command received, and for sending a response command according to a state of the control target section after the control operation for the control target section and a controller, including: a display and operator panel section which displays an image corresponding to an operator panel of an audio apparatus to be controlled and in which an operation is indicated through the image displayed; and a central processing section for sending to the audio apparatus an operation control command associated with the operation indicated from the display and operator panel section and for updating the image displayed on the display and operator panel section, according to a response command received from the audio apparatus.

It is another object of the present invention to provide an audio system, comprising an audio apparatus, including: a control target section; an operation section for a user to conduct operation; and an operation control section for controlling the control target section according to an operation state of the operation section and for sending an operation notifying command to notify, according to the operation state of the control target section, the state of operation to a transmission partner, wherein the operation control section repeatedly resends the operation notifying command until a response command notifying reception of the operation notifying command is received from the transmission partner of the operation notifying command; and a controller, including: a display section for displaying an image corresponding to an operator panel of an audio apparatus to be controlled; and a central control section for updating the image displayed on the display section, according to an operation notifying command received from the audio apparatus.

It is another object of the present invention to provide a method of controlling an audio apparatus including a control target section, comprising the steps of: receiving an operation control command; controlling operation of the control target section corresponding to the operation control command received, according to the operation control command; and sending a response command according to a state of the control target section after the control operation for the control target section.

It is another object of the present invention to provide a method of controlling an audio apparatus including an operator panel section for the user to conduct operation and a control target section, comprising the steps of: controlling the control target section according to a state of operation of the operator panel section; generating an operation notifying command to notify, according to a state of operation of the control target section, the state of operation; sending the operation notifying command generated to a transmission partner; and repeatedly resending the operation notifying command until a response command notifying reception of the operation notifying command is received from the transmission partner of the operation notifying command.

The state of operation of the audio apparatus displayed on the display screen matches the actual state of operation thereof in any situation. Consequently, the user can make the audio apparatus conduct operation as desired by the user.

### BRIEF DESCRIPTION OF THE DRAWINGS

The objects and features of the present invention will become more apparent from the consideration of the following detailed description taken in conjunction with the accompanying drawings in which:
Fig. 1 is a block diagram showing a general configuration of an audio system;
Fig. 2 is a top view of a front panel of a receiver system;
Fig. 3 is a top view of a rear panel of the receiver system;
Fig. 4 is a diagram showing a data format of an audio control command;
Fig. 5 is a diagram showing a data format of an HID class control command;
Fig. 6 is a front view of a graphic user interface (GUI) screen;
Fig. 7 is a flowchart of operation from a GUI screen;
Fig. 8 is a flowchart of operation from an operator panel; and
Fig. 9 is a general block diagram of an audio amplifier of the prior art.

### DESCRIPTION OF THE PREFERRED EMBODIMENTS

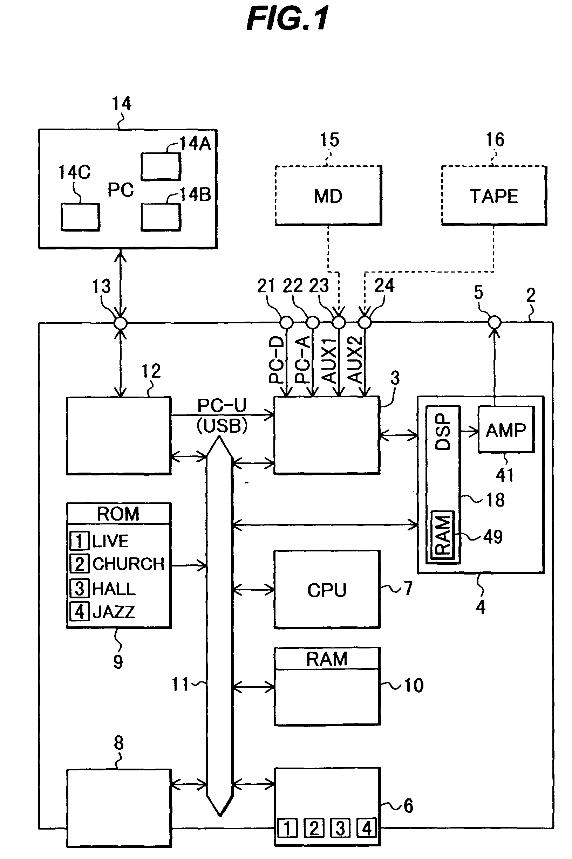

Fig. 1 shows a general block diagram of an embodiment of an audio system according to the present invention.

The audio system 1 includes a receiver 2 and a personal computer 14. The receiver 2 includes a tuner section, not shown. The personal computer 14 is connected via a USB interface 12 to the receiver 2 to control the receiver 2. If desired, the user can expand the audio system 1 by connecting a mini-disk (MD) player 15 to a first auxiliary terminal 23, which will be described later, and/or a tape deck 16 to a second auxiliary terminal 24, which will be described later.

An outline of the construction of the receiver 2 will be described by referring to Fig. 1.

A digital audio signal from a sound card of the personal computer 14 is inputted to a digital audio signal terminal 21. An analog audio signal from a sound card of the computer 14 is fed to an analog audio signal terminal 22. A digital or analog audio signal from an external digital audio (recording) reproducing device such as an MD player is delivered to the first auxiliary terminal 23. An analog audio signal from an external digital audio (recording) reproducing device such as the tape deck 16 is delivered to the second auxiliary terminal 24. The signal connecting terminals 21 to 24 are connected to an input selector 3. An audio signal via USB, i.e., PC-U is inputted via a USB interface 12, which will be described later, to the selector 3. The selector 3 includes an A/D converter. An audio amplifier 4 conducts digital signal processing for the analog audio signal received via the selector 3, amplifies the audio signal, and outputs the amplified signal to a speaker terminal 5. The terminal 5 is connected to a speaker. The receiver 2 also includes an operator panel 6 including various operation keys.

A CPU 7 supervises the overall operation of the receiver 2. A display 8 displays various information items such as a sound source being selected and a DSP mode. An ROM 9 stores various programs for DSP, data for DSP, various control programs, and control data. An RAM 10 serves as a work area to temporarily store various data. The USB interface 12 communicates signals via a USB terminal 13 with the personal computer 14. Specifically, the USB interface 12 transfers a control signal received from the computer 14 to a bus 11 and a control signal received from the bus 11 to the computer 14. On receiving an audio signal (PC-U) from the computer 14, the USB interface 12 sends the signal to the input selector 3.

The audio amplifier 4 includes an amplifier 41 to amplify an audio signal, an RAM 49 to serve also as a work area, and a sound field processor 18 to conduct sound field processing through digital signal processing.

The bus 11 connects the input selector 3, the audio amplifier 4, the operator panel 6, the CPU 7, the display 8, the ROM 9, the RAM 10, and the USB interface 12 to each other.

The RAMs 10 and 49 are connected to a backup power source, not shown. Even if the system is not powered, data can be kept retained therein, for example, about one week.

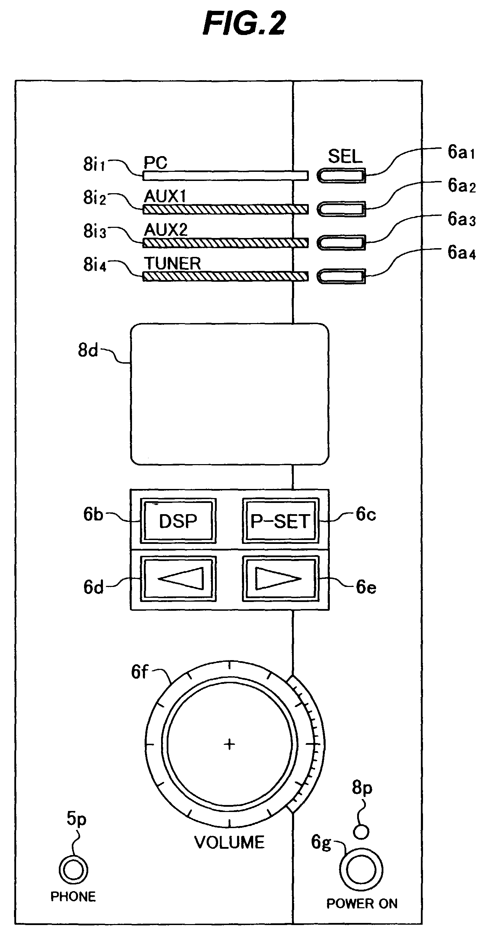

Fig. 2 shows a front view of a front panel of the receiver 2.

The front panel of the receiver 2 includes a plurality of switches partly constituting the operation panel 6.

Selector switches 6a1 to 6a4 select a sound source. A DSP switch 6b indicates whether or not the DSP is operated. A preset switch 6c, which can be set to on exclusively with respect to the DSP switch 6b, indicates whether or not preset station selection is desired to function when the tuner section is in use. When the DSP switch 6b is on, a pair of up/down switches 6d and 6e function as a DSP mode selection switch. When the preset switch 6c is on, the switches 6d and 6e function as a station selection switch. A volume control 6f adjusts magnitude of sound volume. A power switch 6g turns power on/off.

The front panel of the receiver 2 includes a headphone jack 5p to connect a headphone.

The front panel of receiver 2 further includes display sections each constituting a part oh the display 8.

A multifunctional display section 8d, which includes a dot-matrix transmission liquid crystal display (LCD) with a backlight or a fluorescent luminescence (FL) display element, displays various information. When the sound source currently selected is a sound card of the personal computer 14 connected to the system via the digital audio terminal 21 or the analog audio terminal 22, or the USB terminal 13, a first indicator 8i1 turns on. When the current sound source is an external audio (recording) reproducing device connected to the system via the first auxiliary terminal 23, a second indicator 8i2 turns on. When the current sound source is an external audio (recording) reproducing device connected to the system via the second auxiliary terminal 24, a third indicator 8i3 turns on. When the current sound source is an internal tuner, a fourth indicator 8i4 turns on. When the receiver 2 is powered, a power indicator 8p turns on.

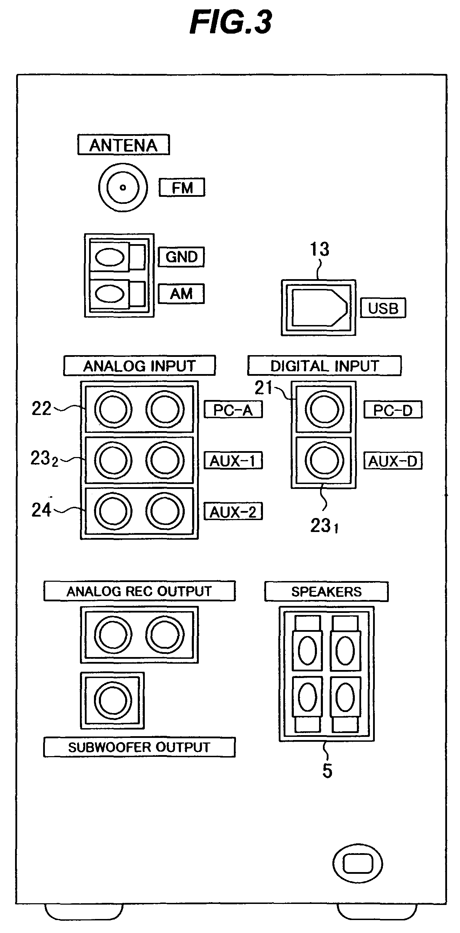

Fig. 3 shows a front view of a rear panel of the receiver 2. Arranged on the rear panel are the speaker terminal 5, the digital audio terminal 21, the analog audio terminal 22, and the first and second auxiliary terminal 23 and 24 described above. The first auxiliary terminal 23 includes a digital audio auxiliary terminal 23₁ to receive a digital audio signal from an external digital (recording) reproducing device and an analog audio auxiliary terminal 23₂ to receive an analog audio signal from an external digital (recording) reproducing device. The rear panel further includes a USB terminal 13, antenna terminals (an FM antenna terminal, an AM antenna terminal, and a ground terminal), an analog audio output terminal, and a subwoofer output terminal.

Subsequently, description will be given of a data format of a control command conforming to a USB interface standard.

The USB interface standard stipulates a control command including a set request command and a get request command. The set request command is provided for the personal computer 14 to set values to various parameters of the receiver 2. The get request command is used by the computer 14 to read the values of parameters from the receiver 2.

The control command also includes an audio class control command to handle audio signals.

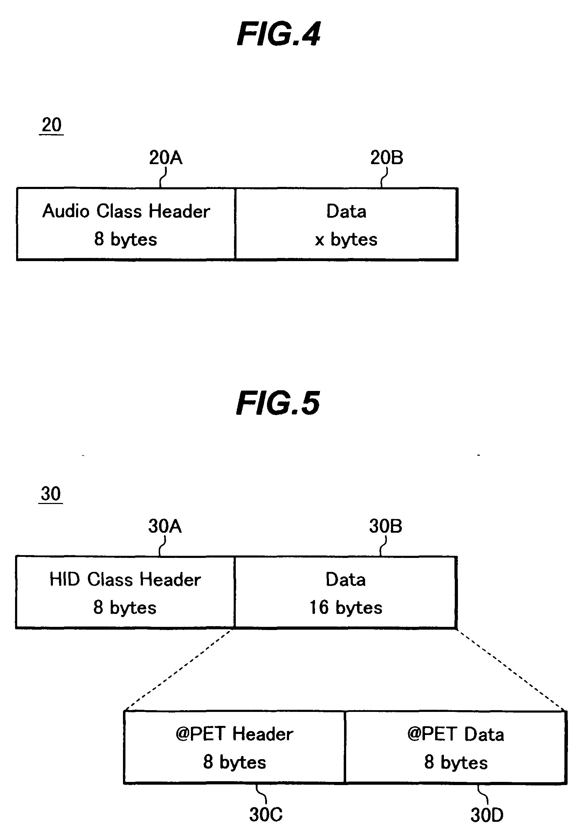

Fig. 4 shows a format of an audio class control command 20. The command 20 includes an 8-byte audio class header 20A to indicate that this command is an audio class control command and an x-byte data field 20B (x varies depending on the control command).

Even when the computer 14 sends a set request command in the format of audio class control command to the receiver 2, no response is transmitted from the receiver 2. This consequently results in a situation similar to the problem of the prior art described above. Namely, a state of operation of the receiver 2 recognized by the personal computer 14 may possibly differ from an actual state thereof depending on cases.

This embodiment uses, in place of an audio class control command, an HID class control command in which control operation thereof can be freely defined.

Fig. 5 shows a data format of an HID class control command 30 to handle audio signals. As can be seen from this data format, the command 30 includes an 8-byte HID class header 30A and a data field 30B.

The data field 30B includes an 8-byte header 30C and an 8-byte data field 30D (respectively indicated as @PET Header and @PET Data in Fig. 5). The header 30C indicates that this command is a control command equivalent to an audio class control command.

When a state of the receiver 2 changes, the receiver 2 issues a control command. As such a control command, an audio class control command is used with specifications of, e.g., control of sound volume. In this embodiment, the receiver 2 sends an HID class control command in place of an audio class control command to the computer 14. In this situation, the header 30C of the HID class control command is set to a value of the header for the get request command of the audio class control command and the data field 30D is set to data of the audio class control command.

Next, operation of the embodiment will be described. In Fig. 1, the computer 14 includes a display with operator panel (display) 14A, a central processing unit 14B, and a read unit 14C.

To operate the receiver 2 via the computer 14, the user conducts operation in a GUI screen displayed on the display 14A.

Description will be first given of a layout of the GUI screen and then of specific operation of this embodiment. In this description, programs and graphic data to display GUI screens are supplied to the computer 14 via a recording media including a disk recording media such as a compact disk read-only memory (CD-ROM) or a semiconductor recording media such as a memory card. The programs and the graphic data are then loaded in the computer 14 via the read unit 14C.

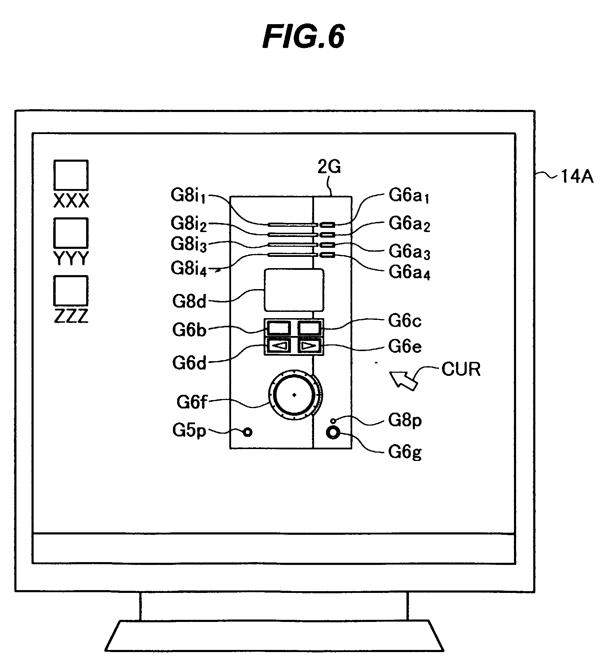

Fig. 6 shows an example of the GUI screen.

The display 14A of the computer 14 displays a GUI screen 2G graphically similar to a front panel of the receiver 2.

Constitution of the screen 2G will be described. The screen 2G includes selector switch items 6a1 to 6a4 respectively corresponding to selector switches 6a1 to 6a4 for sound source selection, a DSP switch item G6b corresponding to the DSP switch to indicate whether or not the DSP is to be operated, a preset switch item G6c associated with the preset switch 6c to indicate whether or not preset selection is required when the tuner section is in use, up and down switch items G6d and G6e correspond to the up and down switches 6d and 6e, a sound volume adjuster item G6f corresponds to the sound volume adjuster 6f, and a power switch item G6g associated with a power switch 6g to turn power on or off. These switch items G6a to G6g are arranged in almost the same way as for the associated switches on the front panel of the receiver 2.

The screen 2G further includes a headphone jack item G5p, which turns on when a headphone is connected to the headphone jack 5p.

The screen 2G also includes a multifunctional display window item G8d corresponding to the multifunctional display section 8d to display various information, first to fourth indicator items G8i1 to G8i4 respectively corresponding the indicators 8i1 to 8i4, and a power indicator item G8p corresponding to the power indicator 8p which turns on when the system is powered.

Description will now be given of operation of the screen 2G including a cursor CUR.

The user moves the cursor CUR to a position over a target item by a pointing device such as a mouse. When a 2-button mouse including a left button and a right button is used, the user clicks (or depresses once) the left button. This operation is interpreted as depression of one of the switches on the panel of the receiver 2.

When the user moves the cursor CUR to a position over the volume control item G6f and holds the left button (to keep the left button in a depressed state), it is recognized that the volume control 6f is turned to increase magnitude of sound volume for a period of time in which the item G6f is kept held. If the user hods the right button, the system interprets that the volume control 6f is rotate to decrease magnitude of sound volume for a period of time in which the item G6f is kept held.

The multifunctional display window item G8d displays various information in response to operation conducted almost in the same way as for the multifunctional display section 8d of the receiver 2.

The first to fourth indicator items G8i1 to G8i4 and the power indicator item G8p respectively reflect the on or off states of the indicators, respectively corresponding to these indicator items, on the front panel of the receiver 2.

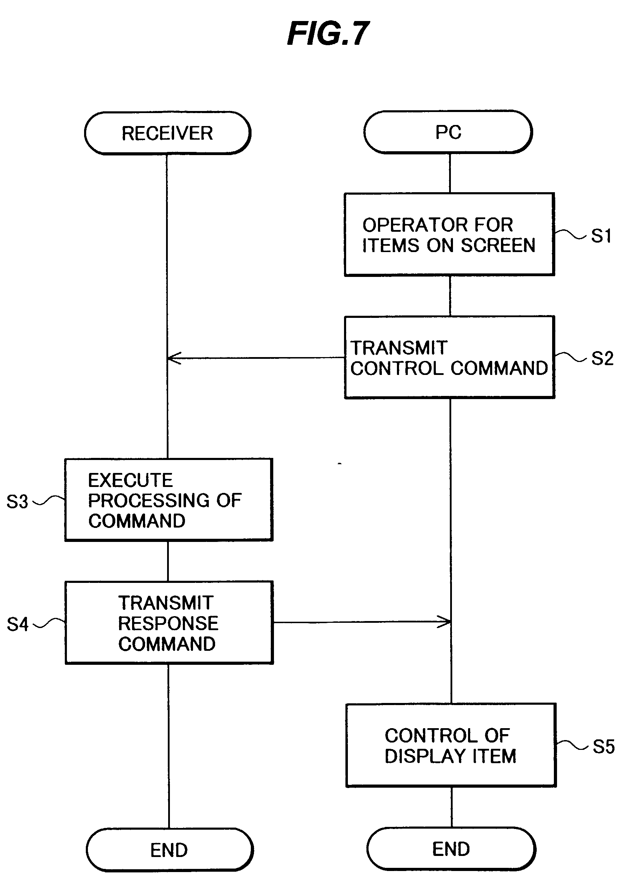

Referring now to Fig. 7, description will be given of actual operation in GUI screens.

Fig. 7 is a sequence flowchart for the GUI screen operation. In this description of specific operation, a sound source is selected by a 2-button mouse.

On the display screen of the display 14A of the computer 14, the user moves the cursor CUR by the mouse to a position over the selector switch item G6ax (x = 1, 2, 3, or 4) connected to a sound source to be selected. The user then clicks the left button of the mouse (step S1).

In response thereto, the CPU (microprocessor) 14B of the computer 14 determines the item indicated by the cursor CUR. The microprocessor 14B generates a control command (set request command) notifying the activation of the selector switch item G6ax and transmits the command via the USB terminal 13 to the receiver 2 (step 2).

At this point, the indicator item G8ix corresponding to the selector switch G6ax selected on the screen of the display 14A is still kept off.

On the other hand, when the CPU 7 of the receiver 2 receives the control command (set request command) via the USB terminal 13 and the USB interface 12, the CPU 7 executes processing associated with the set request command (step S3).

In this example, the processing is almost the same as that achieved when the selector switch 6ax is depressed. Namely, the CPU 7 controls the input selector 3 to connect the terminal corresponding to the selector switch 6ax to the audio amplifier 4. If the DSP switch 6b is kept depressed, the CPU 7 connects the pertinent terminal via an A/D converter, not shown, to the RAM 49 in the sound field processor (DSP) 18. Thereafter, the indicator 8ix is set to on.

The CPU 7 generates a response command (set request command) including a result of the command processing and sends the command via the bus 11, the USB interface 12, and the SB terminal 13 to the computer 14 (step S4).

The CPU 7 receives a response command (set request command) from the microprocessor 14B of the computer 14. Having received the set request command, the receiver 2 confirms execution of processing which is almost the same as the processing for depression of the selector switch 6ax and then turns the indicator display item G8ix corresponding to the selector switch G6ax on.

Only when the user conducts operation on the display 14A of the computer 14 and the receiver 2 completely carries out an operation corresponding to the operation on the display 14A, a result of the operation is reflected in the GUI screen 2G of the display 14A. Therefore, the state of operation displayed on the GUI screen 2G matches the actual state of the receiver 2 in any situation.

When a predetermined time lapses before a response command is received from the receiver 2, the computer 14 assumes that the control command sent from the computer 14 is not appropriately accepted. The computer 14 therefore keeps the GUI screen 2G (such as the on or off state of the pertinent indicator item) unchanged.

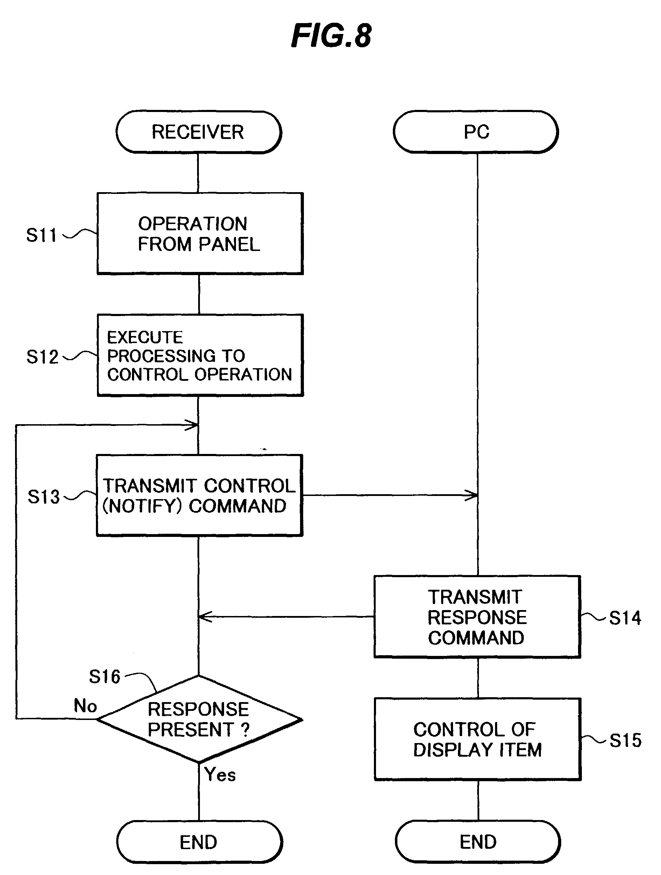

Referring next to Fig. 8, description will be given of operation when the user operates the front panel of the receiver 2.

Fig. 8 is a flowchart of a sequence of operation on the panel of the receiver 2. Also in this case, the operation is conducted to select a sound source.

The user operates or depresses one of the selector switches 6ax (x = 1, 2, 3, or 4) in the panel of the receiver 2 (step S11). The CPU 7 determines the depressed selector switch and executes processing to control operation corresponding to the selector switch (step S12). The CPU 7 generates a control command (set request command) indicating that the selector switch has been depressed and sends the command via the bus 11, the USB interface 12, and the USB terminal 13 to the computer 14 (step S13).

Having received the set request command indicating depression of one of the selector switches 6ax, the computer 14 generates a response command (set request command) notifying reception of the set request command and sends the command to the receiver 2 (step S14). The computer 14 then turns the indicator item G8ix corresponding to the selector switch G6ax on (step S15).

However, it is impossible for the receiver 2 to determine whether or not the set request command of step S12 has been completely sent to the computer 14. Therefore, if a predetermined time lapses before a response command is received, the CPU 7 assumes that the control command transmitted in step 13 has not been transmitted (no in step S16) and hence returns to step S13 to transmit again the control command. The CPU 7 repeatedly executes this processing until a response command is received from the computer 14.

Even if no response is received from the computer 14, the receiver 2 controls operation according to a state of the panel operated by the user. This minimizes the response time of operation of the receiver 2 and increases usability thereof for the user.

The state of operation of the receiver 2 completely reflects on the GUI screen 2G of the display 14A. Therefore, the state of operation displayed on the GUI screen 2G matches the actual state of operation of the receiver 2 in any cases.

According to this embodiment described above, in the operation carried out on the GUI screen of the computer 14 as well as in the operation conducted from the panel of the receiver 2, the state of operation displayed on the GUI screen always matches the actual state of operation in the receiver 2. Therefore, the operation can be controlled as the user desires.

The GUI screen is similar to the panel of the receiver or the GUI includes items arranged in almost the same way as for the associated indicators on the panel. Consequently, even if the user rarely operates the receiver 2 in usual situations, it is possible for the user to learn actual operation of the receiver 2 by operating the ordinary personal computer 14 to activate the receiver 2.

In the description above, the USB interface is used between the personal computer and the receiver. However, the embodiment is applicable also to an apparatus employing an interface standard in which no response is returned to a control command.

Although the receiver is used as the audio apparatus in the description, the embodiment is also applicable to other audio (visual) apparatuses such as an amplifier, a tuner, a CD player, a digital video disk (DVD) player, and a digital audio tape (DAT) player.

While the present invention has been described with reference to the particular illustrative embodiments, it is not to be restricted by those embodiments but only by the appended claims. It is to be appreciated that those skilled in the art can change or modify the embodiments without departing from the scope and spirit of the present invention.

## Claims

1. An audio apparatus, comprising:
a control target section;
a control command receiving section for receiving an operation control command associated with the control target section; and
an operation control section for controlling operation of the control target section corresponding to the operation control command received, and for sending a response command according to a state of the control target section after the control operation for the control target section.

2. An audio apparatus, comprising:
a control target section;
an operation section for a user to conduct operation; and
an operation control section for controlling the control target section according to an operation state of the operation section and for sending an operation notifying command to notify, according to the operation state of the control target section, the state of operation to a transmission partner, wherein
the operation control section repeatedly resends the operation notifying command until a response command notifying reception of the operation notifying command is received from the transmission partner of the operation notifying command.

3. A controller, comprising:
a display and operator panel section which displays an image corresponding to an operator panel of an audio apparatus to be controlled and in which an operation is indicated through the image displayed; and
a central processing section for sending to the audio apparatus an operation control command associated with the operation indicated from the display and operator panel section and for updating the image displayed on the display and operator panel section, according to a response command received from the audio apparatus.

4. A controller, comprising:
a display section for displaying an image corresponding to an operator panel of an audio apparatus to be controlled; and
a central control section for updating the image displayed on the display section, according to an operation notifying command received from the audio apparatus.

5. A controller according to claim 4, wherein the central processing section sends to the audio apparatus a response command notifying reception of the operation notifying command.

6. A controller according to claim 4, further including a read section for accessing a recording media on which graphic data to display the image is recorded and reading the graphic data therefrom, wherein
the display section displays the image according to the graphic data.

7. An audio system, comprising
an audio apparatus including:
a control target section;
a control command receiving section associated with the control target section, for receiving an operation control command; and
an operation control section for controlling operation of the control target section corresponding to the operation control command received, and for sending a response command according to a state of the control target section after the control operation for the control target section and
a controller, including:
a display and operator panel section which displays an image corresponding to an operator panel of an audio apparatus to be controlled and in which an operation is indicated through the image displayed; and
a central processing section for sending to the audio apparatus an operation control command associated with the operation indicated from the display and operator panel section and for updating the image displayed on the display and operator panel section, according to a response command received from the audio apparatus.

8. An audio system according to claim 7, wherein:
the controller includes a read section for accessing a recording media on which graphic data to display the image is recorded and reading the graphic data therefrom; and
the display section displays the image according to the graphic data.

9. An audio system according to claim 7, wherein the audio apparatus further includes a plurality of operation items, and controls operation of the control target section according to operation of the operation items or the operation control command.

10. An audio system, comprising
An audio apparatus, including:
a control target section;
an operation section for a user to conduct operation; and
an operation control section for controlling the control target section according to an operation state of the operation section and for sending an operation notifying command to notify, according to the operation state of the control target section, the state of operation to a transmission partner, wherein
the operation control section repeatedly resends the operation notifying command until a response command notifying reception of the operation notifying command is received from the transmission partner of the operation notifying command; and
a controller, including:
a display section for displaying an image corresponding to an operator panel of an audio apparatus to be controlled; and
a central control section for updating the image displayed on the display section, according to an operation notifying command received from the audio apparatus.

11. An audio system according to claim 7, further including a USB interface for connecting the audio apparatus to the controller.

12. An audio system according to claim 10, further including a USB interface for connecting the audio apparatus to the controller.

13. A method of controlling an audio apparatus including a control target section, comprising the steps of:
receiving an operation control command;
controlling operation of the control target section corresponding to the operation control command received, according to the operation control command; and
sending a response command according to a state of the control target section after the control operation for the control target section.

14. A method of controlling an audio apparatus including an operator panel section for the user to conduct operation and a control target section, comprising the steps of:
controlling the control target section according to a state of operation of the operator panel section;
generating an operation notifying command to notify, according to a state of operation of the control target section, the state of operation;
sending the operation notifying command generated to a transmission partner; and
repeatedly resending the operation notifying command until a response command notifying reception of the operation notifying command is received from the transmission partner of the operation notifying command.
